# EUROPEAN PATENT APPLICATION

(11) **EP 4 746 554 A1**
(43) Date of publication of application: **20.05.2026**
(21) Application number: 24856649.9
(22) Date of filing: 11.07.2024
(51) Int. Cl.: H04W 72/0446, H04B 1/44, H04L 27/26, H04W 88/08, H04W 92/20

(54) **APPARATUS AND METHOD FOR USING TIME DIVISION DUPLEXING METHOD IN FRONTHAUL INTERFACE**

(30) Priority: 18.08.2023 KR 20230108634; 06.09.2023 KR 20230118638
(71) Applicant: Samsung Electronics Co., Ltd., Suwon-si, Gyeonggi-do 16677 (KR)
(72) Inventor: JANG, Moonheok, Suwon-si Gyeonggi-do 16677 (KR); SUNG, Seungmin, Suwon-si Gyeonggi-do 16677 (KR); KIM, Taeyoup, Suwon-si Gyeonggi-do 16677 (KR); KIM, Hyunseok, Suwon-si Gyeonggi-do 16677 (KR); SOHN, Daeho, Suwon-si Gyeonggi-do 16677 (KR); HWANG, Yoonjun, Suwon-si Gyeonggi-do 16677 (KR)
(74) Representative: Gulde & Partner
(86) International application number: PCT/KR2024/009942
(87) International publication number: WO 2025/042035

(57) **Abstract**

This apparatus of a radio unit (RU) may comprise: a radio frequency (RF) switch selectively connected to either an uplink path or a downlink path for time duplex division (TDD); at least one processor; and a memory including instructions. When executed individually or collectively by the at least one processor, the instructions can cause the apparatus to: receive, from a distributed unit (DU), a control plane message within a downlink reception window; obtain, on the basis of data direction information and a section type indicator of a common header of the control plane message, a section for downlink scheduling; and, on the basis of a command for increasing the symbol number of the section and information for indicating the number of symbols, change, from the uplink path to the downlink path, a path to which the RF switch is connected.

## Description

### [Technical Field]

The following descriptions relate to a device and a method for using a time division duplexing method in a fronthaul interface.

### [Background Art]

As transmission capacity increases in a wireless communication system, a functional split that functionally separates a base station is being applied. According to the functional split, the base station may be divided into a distributed unit (DU) and a radio unit (RU). A fronthaul interface is defined for communication between the DU and the RU.

### [Disclosure]

### [Technical Solution]

A radio unit (RU) may comprise a radio frequency (RF) switch selectively coupled to one of an uplink path and a downlink path for time duplex division (TDD). The RU may comprise at least one processor comprising processing circuitry. The RU may comprise at least one memory, including instructions, including one or more storage media. The instructions, when executed individually and collectively by the at least one processor, may cause the RU to receive, from a distributed unit (DU), a control plane message within a downlink reception window. The instructions, when executed individually and collectively by the at least one processor, may cause the RU to obtain a section for downlink scheduling based on a section type indicator and data direction information of a common header in the control plane message. The instructions, when executed individually and collectively by the at least one processor, may cause the RU to change a path to which the RF switch is coupled from the uplink path to the downlink path based on a symbol number increment command and information indicating the number of symbols of the section.

A method performed by a radio unit (RU) may comprise receiving, from a distributed unit (DU), a control plane message within a downlink reception window. The method may comprise obtaining a section for downlink scheduling based on a section type indicator and data direction information of a common header in the control plane message. The method may comprise changing a path to which a radio frequency (RF) switch selectively coupled to one of an uplink path and a downlink path for time duplex division (TDD) is coupled from the uplink path to the downlink path based on a symbol number increment command and information indicating the number of symbols of the section.

A non-transitory computer-readable storage medium may store one or more programs comprising instructions which, when executed individually or collectively by at least one processor of a radio unit (RU) including a radio frequency (RF) switch selectively coupled to one of an uplink path and a downlink path for time duplex division (TDD), cause the RU to receive, from a distributed unit (DU), a control plane message within a downlink reception window. The non-transitory computer-readable storage medium may store one or more programs comprising instructions which, when executed individually and collectively by the at least one processor, cause the RU to obtain a section for downlink scheduling based on a section type indicator and data direction information of a common header in the control plane message. The non-transitory computer-readable storage medium may store one or more programs comprising instructions which, when executed individually and collectively by the at least one processor, cause the RU to change a path to which the RF switch is coupled from the uplink path to the downlink path based on a symbol number increment command and information indicating the number of symbols of the section.

### [Description of the Drawings]

FIG. 1 illustrates an example of a wireless communication system.
FIG. 2A illustrates an example of network entities according to a distributed deployment.
FIG. 2B illustrates an example of an open-radio access network (O-RAN) fronthaul interface.
FIG. 3A illustrates an example of a functional configuration of a distributed unit (DU).
FIG. 3B illustrates an example of a functional configuration of a radio unit (RU).
FIG. 4 illustrates an example of a function split between a DU and an RU.
FIG. 5 illustrates an example of components included in an RU for supporting dynamic time division duplex (TDD).
FIG. 6 illustrates an example of a method of generating a reception window for a control plane message associated with a timing at which a downlink signal is transmitted.
FIGS. 7A and 7B illustrate examples of parameters included in a control plane message.
FIG. 8A illustrates an example of an operation flow for a method of storing information on a downlink symbol based on a section type of a control plane message.
FIG. 8B illustrates an example of memory of an RU in which information on a downlink symbol is stored.
FIG. 9 illustrates an example of an operation flow for a method of controlling a radio frequency (RF) switch based on information on a downlink symbol.
FIG. 10 illustrates an example of a method of changing a coupling state of an RF switch based on a control plane message.
FIG. 11 illustrates an example of an operation flow of a method of changing a coupling state of an RF switch based on a control plane message.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., packet, message, signal, information, signaling), a term referring to a resource (e.g., section, symbol, slot, subframe, radio frame, subcarrier, resource element (RE), resource block (RB), bandwidth part (BWP), occasion), a term for a calculation state (e.g., step, operation, procedure), a term referring to data (e.g., packets message, user stream, information, bit, symbol, codeword), a term referring to a channel, a term referring to network entity (e.g., a distributed unit (DU), a radio unit (RU), a central unit (CU), a CU-control plane (CP), a CU-user plane (UP), an open radio access network (O-RAN) DU (O-DU), an O-RAN RU (O-RU), an O-RAN CU (O-CU), an O-RAN CU-UP (O-CU-UP), an O-RAN CU-CP (O-CU-CP)), a term referring to components of a device, and the like, that are used in the following description , are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to 'may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP)), these are only examples for explanation. The various embodiments of the present disclosure may be applied to other communication and broadcast systems.

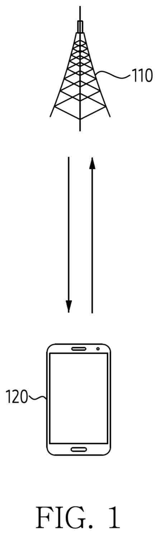

FIG. 1 illustrates an example of a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

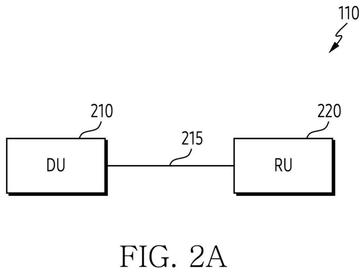

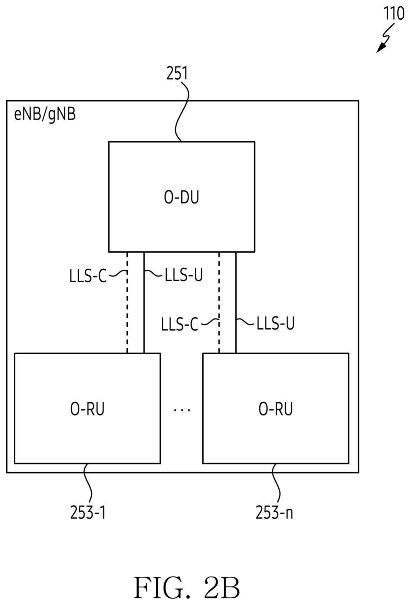

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates an example of network entities according to a distributed arrangement.

For example, the network entities may include a digital unit (DU) 210 and a radio unit (RU) 220 (or a massive multiple input multiple output (MMU) unit). For example, the network entities may be connected through a fronthaul. Unlike a backhaul between a base station and a core network, the fronthaul refers to a section between entities (e.g., the DU 210, and the RU 220) between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. For example, the digital unit (DU) 210 may be implemented separately into a centralized unit (CU) and a distributed unit (DU). Between a core (e.g., 5G core (5GC) or next generation core (NGC)) network and a radio access network (RAN), the base station may be implemented in a structure in which centralized unit (CU), distributed unit (DU), and radio unit (RU) are arranged in order. An interface between the centralized unit (CU) and the distributed unit (DU) may be referred to as an F1 interface.

A centralized unit (CU) may be in charge of functions of a higher layer than the distributed unit (DU), by being connected to one or more distributed units (DUs). For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates an example of an open-radio access network (O-RAN) fronthaul interface. In FIG. 2B, eNB or gNB is exemplified as a base station 110 according to distributed deployment.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

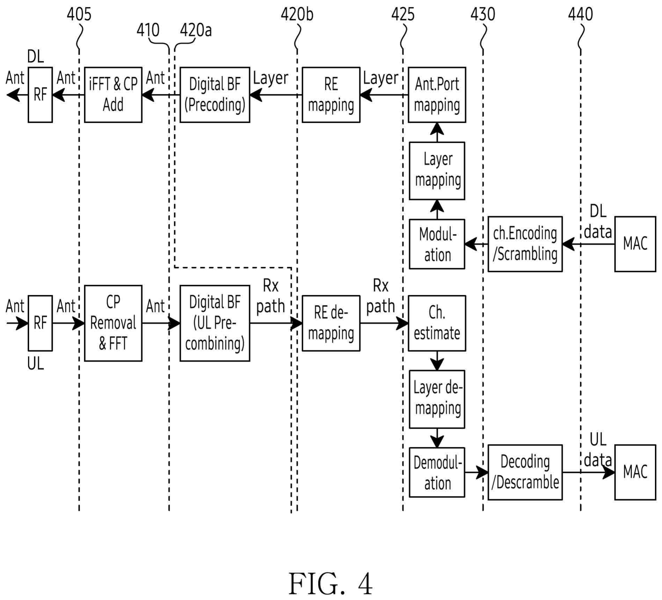

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described later, operations of the DU 210 may also be performed by the O-DU 251. A description of the DU 210 may be applied to the O-DU 251. Likewise, in embodiments described later, operations of the RU 220 may also be performed by the O-RU 253-1. A description of the RU 220 may be applied to the O-RU 253-1.

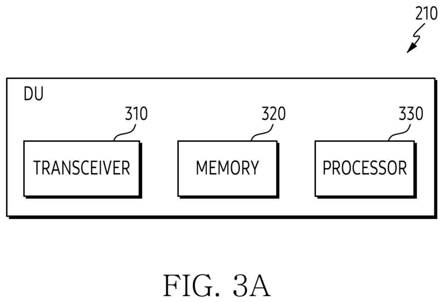

FIG. 3A illustrates an example of a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

For example, the processor 330 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

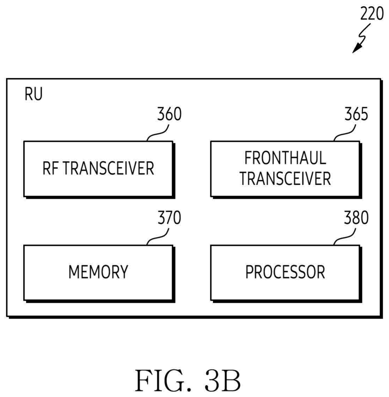

FIG. 3B illustrates an example of a functional configuration of a radio unit (RU).

A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

For example, the processor 380 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

Open Radio Access Network (ORAN) is an organization that handles redefining standard fronthaul interfaces between a DU and an RU according to various function split structures, and provides standard interfaces in a split structure to which Ethernet is applied (e.g., a 7-2x function split structure).

Hereinafter, the present disclosure proposes a device and a method for dynamically controlling a path in the RU 220 for supporting a dynamic TDD configuration. The path may include a downlink path and an uplink path for TDD.

The TDD may represent a scheme of dividing a resource for a signal by time while transmitting and receiving the signal including data between a base station 110 and user equipment 120. For example, the TDD may be included in a resource division scheme for uplink (UL) transmission and downlink (DL) transmission. For example, the resource division scheme may include frequency division duplexing (FDD) and TDD. For example, the signal may include an OFDM signal (or an OFDM symbol) in which an orthogonal frequency division multiplexing (OFDM) modulation scheme is used.

For example, the TDD may represent a scheme in which a resource for DL transmission and a resource for UL transmission are divided over time. In contrast, the FDD may represent a scheme of dividing a resource for DL transmission and a resource for UL transmission according to a frequency. For example, referring to the above description, in the FDD scheme, frequency bands used for the DL transmission and the UL transmission are distinguished from each other, whereas in the TDD scheme, a DL transmission interval and an UL transmission interval may be temporally distinguished in the same frequency band. To support the TDD, the RU 220 of the base station 110 needs to temporally accurately distinguish the DL data transmission interval and the UL data transmission interval through a DL/UL control signal (or a distinction signal) (hereinafter, a control signal) for the TDD.

In an LTE wireless communication system, an example of a TDD configuration pattern may be defined as shown in the following table.

**[Table 1]**

| Configuration | Subframe Number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

The D may represent a subframe for DL, the U may represent a subframe for UL, and the S may represent a special subframe. For example, the D may represent that all 14 symbols in the subframe for the DL are used for the DL data transmission. In addition, for example, the U may represent that all 14 symbols in the subframe for the UL are used for the UL data transmission. In addition, for example, the S may represent that symbols in the special subframe are configured with a downlink symbol, a guard symbol, and an uplink symbol. A ratio of the downlink symbol, the guard symbol, and the uplink symbol of the S may be indicated by a special subframe configuration.

Referring to the above-described table, in the LTE wireless communication system, a configuration for the TDD may be statically selected based on requirements of a service provider or the like. In an NR wireless communication system, unlike LTE, a TDD configuration pattern may be set relatively freely. For example, in the NR wireless communication system, the TDD configuration pattern may be set for each of symbols in one slot. In other words, unlike the LTE where all 14 symbols in one subframe are set as symbols for the uplink transmission (hereinafter referred to as uplink symbols) or symbols for the downlink transmission (hereinafter referred to as downlink symbols), the TDD configuration pattern may be set for each of 14 symbols in one slot in the NR. In the NR wireless communication system, an example of the TDD configuration pattern may be defined as shown in the following table.

**[Table 2]**

| Symbol Number in a slot | | | | | | | | | | | | | | |
|---|---|---|---|---|---|---|---|---|---|---|---|---|---|---|
| Format | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| ... | | | | | | | | | | | | | | |
| 55 | D | D | F | F | F | U | U | U | D | D | D | D | D | D |

The D may represent a downlink symbol, The U may represent an uplink symbol, and the F may represent a flexible symbol. For example, the flexible symbol may represent that an uplink symbol or a downlink symbol may be allocated. In the NR wireless communication system, the TDD configuration may be operated statically, operated semi-statically according to a traffic of a cell, or operated dynamically over time.

As described above, in the TDD configuration, which is flexibly designed for each symbol and operated semi-static or dynamically, a method in which the RU 220 generates a signal (i.e., a control signal) that controls the TDD statically and then controls an RF switch based on it may not be appropriate. Accordingly, a device and a method according to embodiments of the present disclosure proposes a device and a method for dynamically controlling a path in the RU 220. The device and the method according to embodiments of the present disclosure may dynamically identify whether a specific symbol is a resource for the downlink transmission or a resource for the uplink transmission based on a parameter of a control plane message obtained from the DU 210. The device and the method according to embodiments of the present disclosure may control an RF switch selectively coupled to one of a downlink path and an uplink path according to the specific symbol. Accordingly, the device and the method according to embodiments of the present disclosure may dynamically support the TDD.

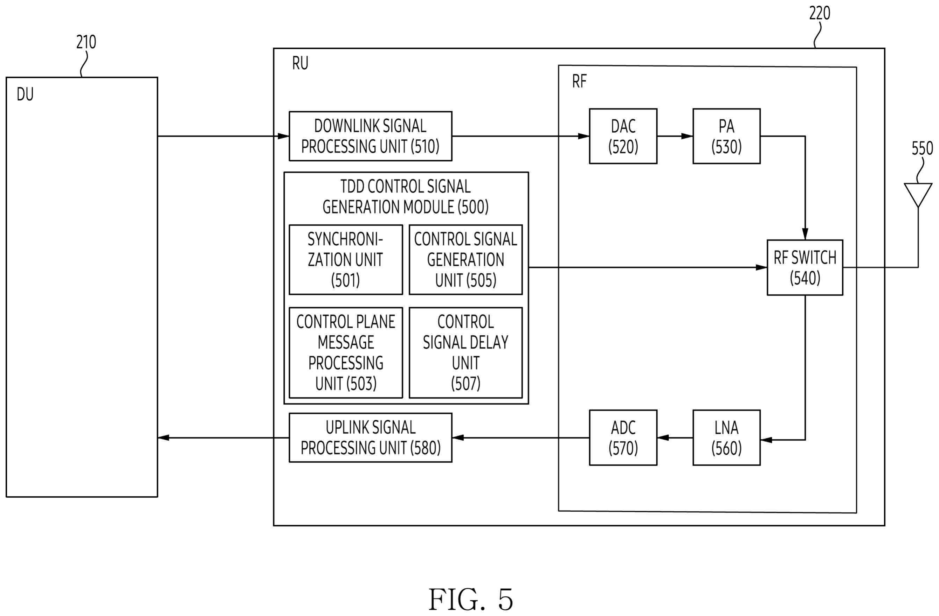

FIG. 5 illustrates an example of components included in an RU for supporting dynamic time division duplex (TDD).

An RU 220 of FIG. 5 may include the RU 220 of FIG. 2A. For example, the RU 220 of FIG. 5 may include at least some of components included in the RU 220 of FIG. 3B. A DU 210 of FIG. 5 may include the DU 210 of FIG. 2A. For example, the DU 210 of FIG. 5 may include at least some of components included in the DU 210 of FIG. 3A.

Referring to FIG. 5, the RU 220 may be connected to the DU 210. For example, the RU 220 may be connected to the DU 210 through a fronthaul interface. For example, the fronthaul interface may be used to transmit and receive data between the RU 220 and the DU 210. The data may include uplink data and downlink data.

Referring to FIG. 5, the RU 220 may include a plurality of components for supporting the dynamic TDD. For example, the RU 220 may include a downlink signal processing unit 510, a digital to analog converter (DAC) 520, a power amplifier (PA) 530, an RF switch 540, an antenna 550, a low noise amplifier (LNA) 560, an analog to digital converter (ADC) 570, an uplink signal processing unit 580, and a TDD control signal generation module 500. For example, the plurality of components may be controlled by a processor 380 of the RU 220. The DAC 520, the PA 530, the RF switch 540, the LNA 560, and the ADC 570 may be referred to as an RF processing unit or an RF unit.

For example, the downlink signal processing unit 510, the DAC 520, and the PA 530 may be included in a downlink path. Alternatively, for example, the uplink signal processing unit 580, the ADC 570, and the LNA 560 may be included in an uplink path. For example, the uplink path and the downlink path may be controlled by the RF switch 540. The RF switch 540 may be referred to as a switch, a switch for selecting a TDD path, a TDD switch, or a path selection element. In a case that a path to which the RF switch 540 is coupled is the uplink path, the RU 220 may provide the DU 210 with the uplink signal obtained through the antenna 550 by processing it. Alternatively, in a case that the path to which the RF switch 540 is coupled is the downlink path, the RU 220 may transmit, through the antenna 550, a downlink signal based on information obtained from the DU 210 by generating and processing it. For example, the uplink signal and the downlink signal may be transmitted and received from user equipment 120 receiving a service from a base station 110 including the DU 210 and the RU 220.

For example, the RU 220 may generate a control signal for TDD according to a static TDD configuration, such as an LTE wireless communication system. For example, the RU 220 may obtain a configuration value corresponding to the TDD configuration in Table 1 described above, and generate the control signal through the TDD control signal generation module 500 according to the configuration value. The RU 220 may change the path to which the RF switch 540 is coupled through the generated control signal. For example, in a case that the control signal indicates the downlink path, the RF switch 540 may be coupled to the downlink path. Alternatively, for example, in a case that the control signal indicates the uplink path, the RF switch 540 may be coupled to the uplink path. In the above-described example, an example of the RF switch 540 in which the coupled path is changed according to an uplink transmission interval and a downlink transmission interval described, but an embodiment of the present disclosure is not limited thereto. For example, in a guard period, the RF switch 540 may be coupled to the downlink path or the uplink path based on the control signal.

According to an embodiment, the RU 220 may generate the control signal for supporting the dynamic TDD through the TDD control signal generation module 500. For example, the TDD control signal generation module 500 may include a synchronization unit 501, a control plane message processing unit 503, a control signal generation unit 505, and a control signal delay unit 507. The RU 220 may generate the control signal for supporting the dynamic TDD based on a control plane message obtained from the DU 210 through the TDD control signal generation module 500. Accordingly, the RU 220 may dynamically control the RF switch 540 through the control signal. Each of the synchronization unit 501, the control plane message processing unit 503, the control signal generation unit 505, and the control signal delay unit 507 may be implemented based on hardware, software, or a combination of hardware and software.

According to an embodiment, the synchronization unit 501 may generate information on a synchronized reception window based on a synchronization plane message obtained from the DU 210, subcarrier spacing (SCS) information, and parameters for the reception window. For example, the RU 220 may generate the information on the synchronized reception window based on the synchronization plane message, the SCS information, and the parameters through the synchronization unit 501.

For example, the synchronization plane message may include a number of a frame synchronized with an absolute time, and information indicating (e.g., frame tick) a start frame of the frame. For example, the RU 220 may generate a frame structure synchronized with the absolute time through the synchronization plane message and the subcarrier spacing (SCS) information supported by the RU 220. For example, the absolute time may represent a time synchronized between the base station 110 and the user equipment 120.

For example, the SCS information may indicate one SCS used for TDD among a plurality of SCSs that may be supported by the RU 220. For example, in LTE, the RU 220 may provide a fixed SCS of 15 kHz. In addition, for example, in NR, the RU 220 may provide the plurality of SCSs including 15, 30, 60, 120, and 240 kHz. For example, the RU 220 may provide SCS of 15, 30, and 60 kHz for data in a frequency range 1 (FR1) band, and SCS of 15 and 30 kHz for a synchronization signal block. For example, the RU 220 may provide SCS of 60 and 120 kHz for data in an FR2 band and SCS of 120 and 240 kHz for a synchronization signal block. In an example, the RU 220 may operate the plurality of SCSs for a resource region defined by a time domain and a frequency domain. As such, operating the plurality of SCSs for the resource region may be referred to as mixed numerology. Hereinafter, for convenience of explanation, a case in which the RU 220 provides a single SCS of 15 kHz or 30 kHz in the FR1 and a single SCS of 120 kHz in the FR2 is described, but the embodiment of the present disclosure is not limited thereto. For example, the RU 220 according to embodiments of the present disclosure may be applied even when the mixed numerology is used.

For example, the parameters for the reception window may include candidates of the reception window. For example, the candidates may be determined based on time information of a common header included in the downlink control plane message. For example, the candidates may be referred to as a specification value. For example, the candidates may be a value configured in the RU 220. For example, the DU 210 may perform downlink transmission in consideration of the reception window based on a management plane message. For example, the management plane message including the candidates may be transmitted from the RU 220 to the DU 210. For example, the time information may include at least one of a start symbol identifier or a time offset. For example, the reception window may be determined based on a maximum time interval and a minimum time interval defined for the time information. For example, the maximum time interval may include a T2a_max_cp_dl parameter. For example, the minimum time interval may include a T2a_min_cp_dl parameter. For example, the reception window may be identified for each symbol.

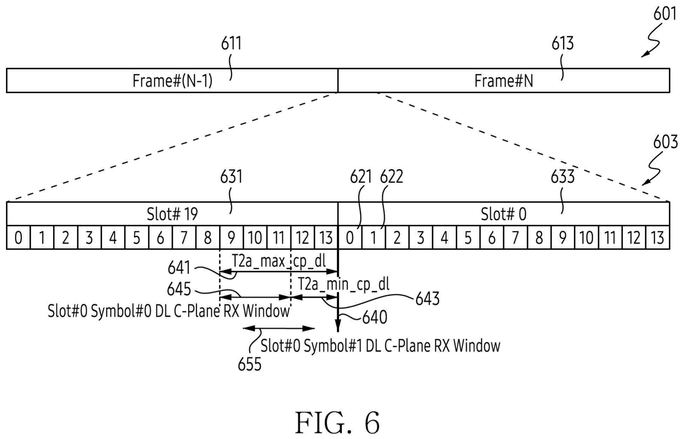

Referring to the above, the RU 220 may generate the information on the synchronized reception window based on the synchronization plane message, the SCS information, and the parameters for the reception window. The synchronized reception window may represent a reception window synchronized with respect to the absolute time. Specific content related to this will be described in FIG. 6.

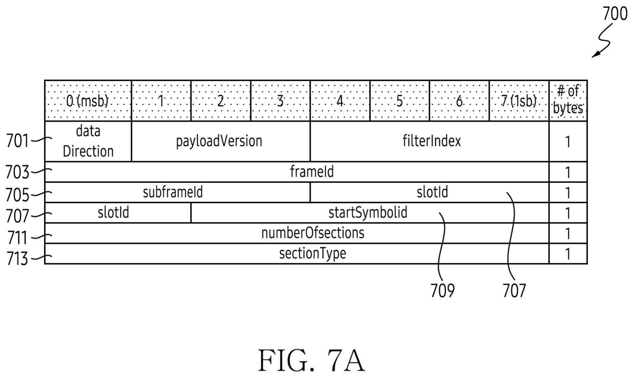

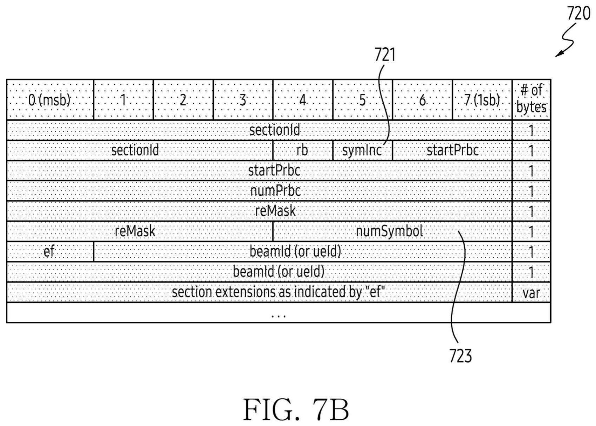

According to an embodiment, the control plane message processing unit 503 may obtain parameters (or information) included in a control plane message. For example, the RU 220 may identify the parameters based on the control plane message obtained from the DU 210 through the control plane message processing unit 503. In this case, the RU 220 may identify a section for downlink scheduling of the control plane message based on a data direction and a section type indicator of the control plane message through the control plane message processing unit 503. The section may be referred to as a section type. For example, the parameters may include time identifiers, a symbol number increment command, and the number of symbols included in the control plane message. For example, the time identifiers may include a frame ID, a subframe ID, and a slot ID. Specific content related to this will be described in FIGS. 7A and 7B below.

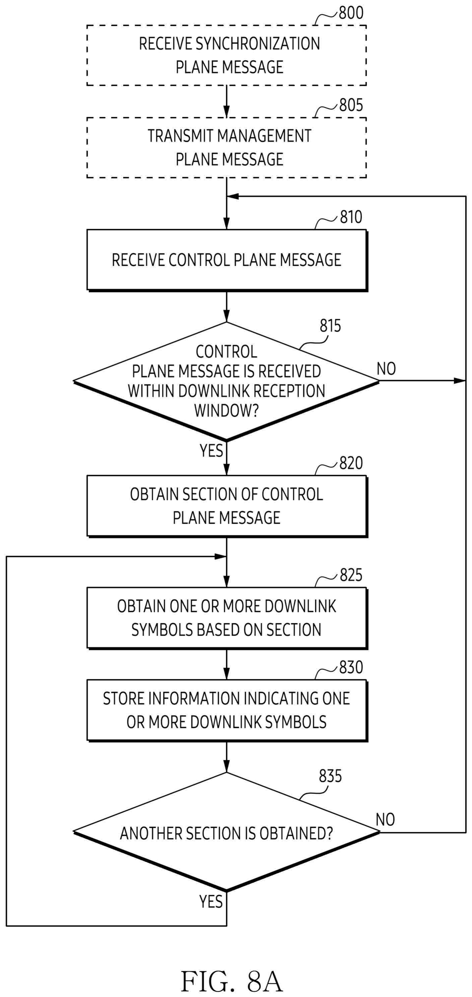

According to an embodiment, the control signal generation unit 505 may generate the control signal based on the information on the synchronized reception window and the parameters. For example, the RU 220 may generate the control signal based on the information on the synchronized reception window and the parameters through the control signal generation unit 505. For example, the RU 220 may identify the parameters of the control plane message obtained in the synchronized reception window and identify one or more downlink symbols for downlink transmission according to the parameters. For example, the RU 220 may store (or write) information on the one or more downlink symbols in memory 370. For example, the RU 220 may identify the one or more downlink symbols based on recognizing (or reading) the information on the one or more downlink symbols stored in the memory 370. The RU 220 may generate the control signal for changing a path coupled to the RF switch 540 with respect to the identified one or more downlink symbols. For example, the control signal may be generated for each of the one or more downlink symbols (i.e., for each downlink symbol). In other words, the control signal may be used to change a path coupled to the RF switch 540 for each downlink symbol. Alternatively, for example, in a case that the one or more downlink symbols are the plurality of subsequent downlink symbols, the control signal may be used to change the path coupled to the RF switch 540 with respect to a time length corresponding to the plurality of subsequent downlink symbols. For example, the RU 220 may transmit a downlink signal from the identified one or more downlink symbols through the antenna 550 using the downlink path coupled based on the control signal. Specific content related to this will be described in FIGS. 8A to 10.

According to an embodiment, the control signal delay unit 507 may delay a timing to which the control signal may be applied to each of the components included in the RU 220. For example, by delaying the timing to which the control signal generated through the control signal generation module 500 may be applied through the control signal delay unit 507, the RU 220 may synchronize a timing to which the control signal is applied in the components of the RU 220. For example, in a case that the downlink path is used, the RU 220 may provide the DAC 520 with the control signal delayed by a first time length through the control signal delay unit 507. In this case, the RU 220 may provide the PA 530 with the control signal delayed by a second time length longer than the first time length through the control signal delay unit 507. A time length including the first time length and the second time length may be determined according to a processing time inside each component included in the RU 220. However, an embodiment of the present disclosure is not limited thereto. For example, the RU 220 according to embodiments of the present disclosure may not include the control signal delay unit 507. Accordingly, the RU 220 may perform downlink transmission (or uplink reception) by generating the control signal at a start point for each symbol based on the absolute time and providing it to each component without delaying for the control signal.

FIG. 6 illustrates an example of a method of generating a reception window for a control plane message associated with a timing at which a downlink signal is transmitted.

The method of FIG. 6 may be performed by the RU 220 of FIG. 5. For example, the reception window may represent a reception window synchronized with the absolute time. FIG. 6 illustrates an example 601 for frames 611 and 613 synchronized with the absolute time and an example 603 for slots 631 and 633 in the frames 611 and 613.

Referring to the example 601, the RU 220 may generate a frame structure including the frames 611 and 613 based on a synchronization plane message obtained a DU 210. For example, the RU 220 may generate the frame structure including the synchronized frames 611 and 613 based on a synchronized frame number and a frame tick included in the synchronization plane message. In this case, the frame structure may be formed based on SCS indicated by the SCS information.

Referring to the example 603, each of the slots 631 and 633 of the frame structure may include symbols based on the SCS. In the example 603 of FIG. 6, for convenience of explanation, the SCS of 30 kHz is assumed. However, an embodiment of the present disclosure is not limited thereto. For example, in a case of the SCS of the 30 kHz, the slot 631 (e.g., a slot #19) may have a length of 0.5 ms, and each of 14 symbols included in the slot 631 may have a length of about 36 µs. The slot 633 (e.g., a slot#0) may also have substantially the same structure as the structure of the slot 631.

Referring to the example 603, the RU 220 may transmit a downlink signal to user equipment 120 in a first symbol 621 (e.g., a symbol #0) of the slot 633. In this case, the first symbol 621 may represent an absolute time at which the downlink signal is transmitted. The RU 220 may receive a downlink control plane message for the downlink signal in a reception window 645 identified based on a minimum time interval 643 and a maximum time interval 641 from a start point 640 of the first symbol 621. For example, the downlink control plane message may include a section (e.g., a section type 1 or a section type 5) for scheduling a resource to transmit the downlink signal. The minimum time interval 643 may be determined based on a processing time required for the RU 220 to receive the downlink control plane message and generate (or process) the downlink signal based on the downlink control plane message. The minimum time interval 643 and the maximum time interval 641 may be configured in the RU 220. For example, the RU 220 may transmit a management plane message including information on the minimum time interval 643 and the maximum time interval 641 to the DU 210. For example, the management plane message may indicate a minimum time interval and a maximum time interval for each symbol. For example, the management plane message may respectively indicate the minimum time interval 643 and the maximum time interval 641 for the first symbol 621, and a maximum time interval, and a maximum time interval for a second symbol 622 (e.g., a symbol #1). As described above, the minimum time interval and maximum time interval for each symbol may be referred to as specification values (or delay management parameters) of the reception window. The RU 220 may identify the reception window 645 for the first symbol 621 and a reception window 655 for the second symbol 622 based on the specification values. In this case, the reception window 645 and the reception window 655 may represent a reception window synchronized with the absolute time according to the synchronization plane message.

FIGS. 7A and 7B illustrate examples of parameters included in a control plane message.

FIG. 7A illustrates an example of parameters of a common header 700 included in the control plane message. For example, the common header 700 in the control plane message may include data direction information 701, time identifiers 703, 705, and 707, a start symbol identifier 709, the number of sections 711, and a section type indicator 713. However, an embodiment of the present disclosure is not limited thereto.

For example, the data direction information 701 may indicate whether the control plane message is a control plane message for uplink (e.g., an uplink control plane message) or a control plane message for downlink (e.g., a downlink control plane message). For example, in a case that a value of the data direction information 701 is 0, the control plane message may be the uplink control plane message. Alternatively, in a case that the value of the data direction information 701 is 1, the control plane message may be the downlink control plane message.

For example, the time identifiers 703, 705, and 707 may include time information of the control plane message. For example, the time identifiers 703, 705, and 707 may include a frame ID 703, a subframe ID 705, and a slot ID 707. For example, the time identifiers 703, 705, and 707 may be used to identify a reception window of the control plane message. For example, in a case that the control plane message is received in the reception window identified from specification values according to a time indicated by the time identifiers 703, 705, and 707, an RU 220 may recognize that the control plane message was received at an appropriate time.

For example, the start symbol identifier 709 may indicate an index of a start symbol of the control plane message. For example, the start symbol identifier 709 may be used to indicate a specific symbol in the slot ID 707.

For example, the number of sections 711 may be used to indicate the number of sections included in the control plane message. In this case, the section type indicator 713 may indicate a section of the control plane message. For example, the section may include a section type 0 to a section type 7. A section type of the control plane message may be associated with scheduling information. For example, the section type for scheduling may include a section type 1, a section type 3, and a section type 5. The section type 1 and the section type 5 may provide general downlink/uplink channel allocation information. The section type 3 may provide allocation information for a physical random access channel (PRACH). The section type for downlink scheduling may be the section type 1 and the section type 5. In other words, a DU 210 may transmit the control plane message including the section type 1 or the section type 5 to the RU 220 for a downlink transmission interval.

According to an embodiment, DL and UL allocation may be temporally divided in a TDD system supported by the RU 220. A minimum unit of the DL and UL allocation may be a symbol. For example, a downlink control plane message including the section type 1 or the section type 5 that provides downlink allocation information may be separated from, and not temporally overlap with an uplink control plane message including the section type 1, the section type 3, or the section type 5 that provides uplink allocation information. In other words, the uplink message including the section type 1, the section type 3, or the section type 5 cannot be allocated to a symbol to which the downlink message including the section type 1 or the section type 5 is allocated. Conversely, the downlink message including the section type 1 or the section type 5 cannot be allocated to a symbol to which the uplink message including the section type 1, the section type 3, or the section type 5 is allocated. Therefore, in a device and a method according to embodiments of the present disclosure, in a case that the downlink control plane message (e.g., in a case that the value of the data direction information 701 is 1) includes a section type (e.g., the section type 1 or the section type 5) for downlink scheduling, the RU 220 may generate the control signal for changing a path of an RF switch 540 based on the section type for the downlink scheduling.

FIG. 7B illustrates an example of a section 720 of the downlink control plane message. For example, the section 720 may represent an example of a portion of the section type 1 or the section type 5.

Referring to FIG. 7B, the section 720 of the downlink control plane message may include a symbol number increment command 721 and information 723 indicating the number of symbols. For example, the symbol number increment command 721 may be used to indicate a symbol related to the section 720. For example, in a case that a value of the symbol number increment command 721 is 0, a symbol number may be maintained. For example, in a case that the value of the symbol number increase command 721 is 0, a symbol (e.g., a symbol #0) indicated by the start symbol identifier 709 may be used for the section 720. For example, in a case that the value of the symbol number increment command 721 is 1, a next symbol (e.g., a symbol#1) that is subsequent to the symbol (e.g., the symbol#0) indicated by the start symbol identifier 709 may be used for the section 720. For example, the information 723 may be used to indicate the number of symbols including the symbol identified by the symbol number increment command 721. For example, the symbols indicated by the information 723 may be allocated for the section 720.

Referring to FIGS. 7A and 7B, one control plane message may include one or more sections. For example, one control plane message may include one section 720. Alternatively, for example, one control plane message may include a plurality of sections 720. For example, the RU 220 may recognize that the control plane message includes a section type for downlink scheduling based on the data direction information 701 and the section type indicator 713 of the common header 700. Based on the time identifiers 703, 705, and 707 in the control plane message, the symbol number increment command 721 in the section, and the information 723 indicating the number of symbols, the RU 220 may identify a downlink symbol in which downlink transmission is scheduled. The identified information on the downlink symbol may be stored in memory 370 of the RU 220. Specific content related to this will be described in FIG. 8A below.

FIG. 8A illustrates an example of an operation flow for a method of storing information on a downlink symbol based on a section type of a control plane message.

At least some of the methods of FIG. 8A may be performed by the RU 220 of FIG. 5. For example, at least some of the methods may be controlled by a processor 380 of the RU 220. In the following embodiment, each operation may be sequentially performed, but is not necessarily performed sequentially. For example, an order of each operation may be changed, and at least two operations may be performed in parallel.

In operation 800, the RU 220 may receive a synchronization plane message. For example, the RU 220 may receive the synchronization plane message from a DU 210. For example, the synchronization plane message may include a number of a frame synchronized with an absolute time and information (e.g., frame tick) indicating a start frame of the frame. For example, the absolute time may represent a time synchronized between a base station 110 and user equipment 120.

According to an embodiment, the RU 220 may obtain SCS information. For example, the RU 220 may obtain the SCS information from the DU 210. For example, the SCS information may indicate one SCS used for TDD among a plurality of SCSs that may be supported by the RU 220. For example, the one SCS may include 15 kHz, 30 kHz, or 120 kHz.

In operation 805, RU 220 may transmit a management plane message. For example, the RU 220 may transmit the management plane message to the DU 210. For example, the management plane message may include candidates of a reception window for a downlink control plane message. For example, the candidates may be determined based on time information of a common header included in the downlink control plane message. For example, the candidates may be referred to as a specification value. For example, the candidates may be a value configured in the RU 220. For example, the DU 210 may perform downlink transmission in consideration of the reception window based on the management plane message. For example, the time information may include at least one of a start symbol identifier or a time offset. For example, the reception window may be determined based on a maximum time interval and a minimum time interval defined for the time information. For example, the maximum time interval may include a T2a_max_cp_dl parameter. For example, the minimum time interval may include a T2a_min_cp_dl parameter. For example, the reception window may be identified for each symbol. In FIG. 8A, an example of the method including the operation 800 and the operation 805 is illustrated, but an embodiment of the present disclosure is not limited thereto. For example, the operation 800 and the operation 805 may be omitted.

In operation 810, the RU 220 may receive a control plane message. For example, the RU 220 may receive the control plane message from the DU 210. For example, the RU 220 may obtain a common header in the control plane message. For example, the common header may include data direction information, time identifiers, a start symbol identifier, the number of sections, and a section type indicator. However, the embodiment of the present disclosure is not limited thereto. The data direction information may be referred to as a data direction or a downlink indicator. Based on the data direction information of the common header, the RU 220 may identify that the control plane message is a control plane message for downlink (hereinafter, a downlink control plane message). In addition, the RU 220 may identify that the downlink control plane message includes a section type for downlink scheduling based on the section type indicator of the common header. For example, the section type indicator may be referred to as a section type or a section type field.

In operation 815, the RU 220 may identify whether the control plane message is received within a downlink reception window. For example, RU 220 may identify the downlink reception window for the control plane message based on the time identifiers of the common header. For example, the RU 220 may obtain candidates of a synchronized reception window based on the synchronization plane message, the SCS information, and parameters for the downlink reception window. The RU 220 may obtain the downlink reception window corresponding to the time identifiers among the candidates. The RU 220 may identify whether the control plane message is obtained within the downlink reception window. For example, it is possible to identify whether a start point and an end point at which the control plane message is received are included within the downlink reception window.

In the operation 815, in a case that the control plane message is received within the downlink reception window, the RU 220 may perform operation 820. Alternatively, in the operation 815, in a case that the control plane message is received outside the downlink reception window, the RU 220 may perform the operation 810. For example, as the RU 220 performs the operation 810 again, it may receive another control plane message following the control plane message.

In operation 820, the RU 220 may obtain a section of the control plane message. For example, RU 220 may identify the section based on the section type indicator of the common header in the control plane message. For example, the section type indicator may indicate at least one of a section type 1 and a section type 5. For example, the RU 220 may obtain the section indicated based on the section type indicator. For example, RU 220 may obtain the section after identifying the section type indicator.

For example, the section may include a symbol number increment command and information indicating the number of symbols. For example, the symbol number increment command may be used to indicate a symbol related to the section. For example, in a case that a value of the symbol number increment command is 0, a symbol number may be maintained. For example, in a case that the value of the symbol number increment command is 0, a symbol (e.g., a symbol#0) indicated by the start symbol identifier of the common header may be used for the section. For example, in a case that the value of the symbol number increment command is 1, a next symbol (e.g., a symbol#1) that is subsequent to the symbol (e.g., the symbol#0) indicated by the start symbol identifier may be used for the section. For example, the information indicating the number of symbols may be used to indicate the number of symbols including the symbol identified by the symbol number increment command. For example, a symbol indicated by the information indicating the number of the symbols may be allocated for the section. For example, the number of symbols may indicate a value greater than or equal to 1. Accordingly, the information indicating the number of symbols may be used to indicate one or more downlink symbols.

In operation 825, the RU 220 may obtain the one or more downlink symbols based on the section. For example, the RU 220 may obtain the one or more downlink symbols based on the start symbol identifier, the symbol number increment command, and the information indicating the number of symbols. In the example, a case of obtaining the one or more downlink symbols based on the section included in the control plane message is described, but the embodiment of the present disclosure is not limited thereto. For example, the RU 220 may obtain the one or more downlink symbols based on the section and another section of the control plane message. For example, the another section, which is a section subsequent to the section, may include the section type 1 or the section type 5.

For explanation of a method of obtaining the one or more downlink symbols according to the symbol number increment command and the number of symbols, a case in which the start symbol identifier indicates the symbol #0 is assumed. For example, in a case that the symbol number increment command of the section type is 0 and the number of symbols is 1, the RU 220 may obtain (or identify) the symbol #0, which is a symbol for the section. Alternatively, for example, in a case that the symbol number increment command of the section is 1 and the number of symbols is 4, the RU 220 may obtain the symbol #1 to a symbol #4, which are symbols for the section.

In operation 830, the RU 220 may store information indicating the one or more downlink symbols. For example, the RU 220 may store the information indicating the one or more downlink symbols in memory 370. Storing the information in the memory 370 may be referred to as writing the memory 370.

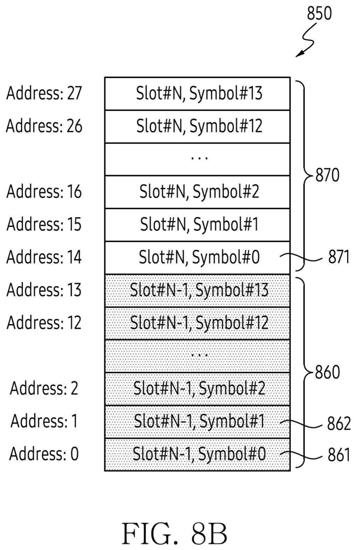

For example, the RU 220 may store the information including an index within a slot of the one or more downlink symbols in the memory 370. In this case, the memory 370 may include a memory region for storing the information. For example, the memory region may include a memory region for two slots. For example, the memory region may include 28 bits (=14symbols*2). For example, the one or more downlink symbols allocated for downlink transmission may be indicated through the index of the one or more downlink symbols. In other words, the index (or the information) of the one or more downlink symbols may be used to indicate whether the downlink control plane message is allocated. Specific content related to this will be described in FIG. 8B below.

In operation 835, the RU 220 may identify whether the another section is obtained. For example, after storing the information obtained based on the section of the control plane message in the memory 370, the RU 220 may identify whether the another section of the control plane message is included.

In the operation 835, in a case that the another section is obtained, the RU 220 may perform the operation 825. For example, the RU 220 may obtain one or more other downlink symbols for the another section based on the another section and store information on the one or more other downlink symbols in the memory 370. Alternatively, in the operation 835, in a case that the another section is not obtained, the RU 220 may perform the operation 810. For example, as the RU 220 performs the operation 810 again, it may receive another control plane message following the control plane message.

FIG. 8B illustrates an example of memory of an RU in which information on a downlink symbol is stored.

In FIG. 8B, an example 850 of a method of storing information on a downlink symbol obtained by an RU 220 in memory 370 is illustrated. The RU 220 of FIG. 8B may include the RU 220 of FIG. 5.

Referring to the example 850, the memory 370 of the RU 220 may include a first memory region 860 and a second memory region 870. The first memory region 860 and the second memory region 870 may be referred to as a memory region. For example, the first memory region 860 may include 14 bits, and the second memory region 870 may include 14 bits. For example, 14 bits of the first memory region 860 may have an address value of 0 to 13. For example, 14 bits of the second memory region 870 may have an address value of 14 to 27. However, an embodiment of the present disclosure is not limited thereto.

Referring to the example 850, the first memory region 860 may be used for a first slot (e.g., a slot #N-1), and the second memory region 870 may be used for a second slot (e.g., a slot #N). For example, a first bit 861 of the first memory region 860 may correspond to a symbol #0 of the first slot, and a second bit 862 of the first memory region 860 may correspond to a symbol #1 after the symbol #0 of the first slot. The symbol #1 may be subsequent to the symbol #0. Also, for example, a first bit 871 of the second memory region 870 may correspond to a symbol #0 of the second slot. Referring to the example 850, the first memory region 860 and the second memory region 870 may include 28 bits. This is because one control plane message may be provided for a maximum of one slot. In other words, information on downlink symbols allocated for one control plane message may be stored in a partial region (e.g., the first memory region 860) of the example 850. While the RU 220 recognizes (or reads) the information in the partial region and generates a control signal for the downlink symbols, other information on other downlink symbols allocated for another control plane message may be stored in a remaining region (e.g., the second memory region 870) of the example 850. According to an embodiment, the RU 220 may generate the control signal for each symbol and clear (or refresh) a bit of a memory region corresponding to the generated symbol. However, the embodiment of the present disclosure is not limited thereto. For example, the RU 220 may generate the control signal for subsequent downlink symbols.

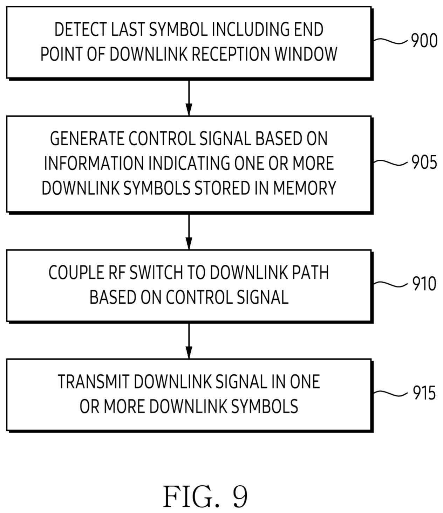

FIG. 9 illustrates an example of an operation flow for a method of controlling a radio frequency (RF) switch based on information on a downlink symbol.

At least some of the method of FIG. 9 may be performed by the RU 220 of FIG. 5. For example, at least some of the method may be controlled by a processor 380 of the RU 220. In the following embodiment, each operation may be sequentially performed, but is not necessarily performed sequentially. For example, an order of each operation may be changed, and at least two operations may be performed in parallel.

In operation 900, the RU 220 may detect a last symbol including an end point of a downlink reception window. For example, the RU 220 may detect the last symbol including the end point of the downlink reception window identified based on a control plane message. However, an embodiment of the present disclosure is not limited thereto. For example, the RU 220 may detect an absolute time corresponding to the end point of the reception window.

In operation 905, the RU 220 may generate a control signal based on information indicating a downlink symbol stored in memory 370. The memory 370 of FIG. 9 may be in a state in which the information indicating the one or more downlink symbols is stored based on the method of FIG. 8A. For example, the RU 220 may generate the control signal based on the information in the memory 370. For example, the RU 220 may generate the control signal for the downlink symbol based on the information indicating the downlink symbol. In other words, the RU 220 may generate the control signal for each symbol.

In operation 910, the RU 220 may couple an RF switch 540 to a downlink path based on the control signal. For example, the control signal may be used to change a path to which the RF switch 540 is coupled to the downlink path for transmission of the downlink signal. For example, the RF switch 540 may disconnect coupling with an uplink path and be coupled to the downlink path based on the control signal.

In operation 915, the RU 220 may transmit a downlink signal in the downlink symbol. For example, the RU 220 may generate the downlink signal through the downlink path activated by controlling the RF switch 540 based on the control signal. The RU 220 may transmit the generated downlink signal in the downlink symbol. For example, the downlink symbol may be used to transmit the downlink signal to user equipment 120 connected to the RU 220.

Alternatively, the RU 220 may generate another control signal based on information that does not indicate the downlink symbol stored in the memory 370 (or other information indicating an uplink symbol). The RU 220 may change the path to which the RF switch 540 is coupled to the uplink path based on the another control signal. For example, the RU 220 may change it to the uplink path based on the another control signal. The RU 220 may transmit the uplink signal in the uplink symbol indicated by the memory 370.

According to an embodiment, the RU 220 may generate the control signal (or the another control signal) based on the information of the memory 370 and transmit the downlink signal (or the uplink signal) and then clear the memory 370. Thereafter, the RU 220 may read a bit following a bit indicating the downlink symbol in the memory 370 and then transmit the downlink signal or the uplink signal based on the bit. The downlink signal may be transmitted from each of the one or more downlink symbols stored in the memory 370. The uplink signal may be transmitted outside the one or more downlink symbols. That is, the RU 220 may repeat reading for the memory 370 to generate and transmit the downlink signal or the uplink signal for each symbol. For example, the reading may be repeated for a memory region (e.g., the first memory region 860 and the second memory region 870) of the memory 370. The RU 220 may read and clear each bit (i.e., symbol unit) of the memory region.

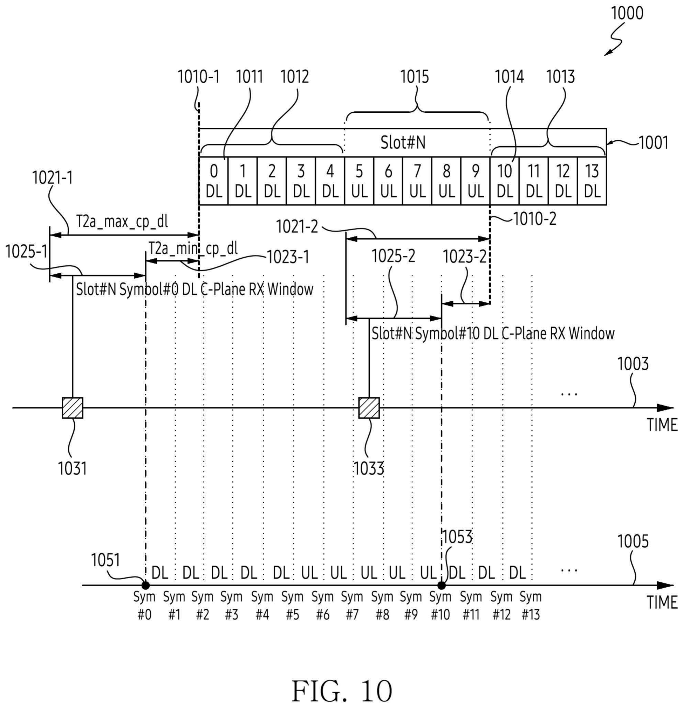

FIG. 10 illustrates an example of a method of changing a coupling state of an RF switch based on a control plane message.

FIG. 10 illustrates an example 1000 of a method of generating a control signal for changing the coupling state of an RF switch 540 based on the control plane message. The coupling state may include a state in which the RF switch 540 is coupled to an uplink path for uplink transmission in TDD and a state in which the RF switch 540 is coupled to a downlink path for downlink transmission in the TDD. For example, the control signal may be used to couple the RF switch 540 to the downlink path. The control plane message may represent a downlink control plane message for scheduling (or downlink scheduling) for the downlink transmission.

Referring to the example 1000, an example 1001 of an uplink symbol and a downlink symbol configured according to a TDD configuration based on an absolute time, an example 1003 of a timing at which downlink control messages including the control plane message are transmitted, and an example 1005 of a timing at which the control signal for coupling with the downlink path is generated are illustrated.

Referring to the example 1001, from a reference point 1010-1, five downlink symbols, five uplink symbols subsequent to the five downlink symbols, and four downlink symbols subsequent to the five uplink symbols may be configured for the TDD. In the example 1001, examples of 14 symbols included in one slot (a slot #N) are described for convenience of explanation, but an embodiment of the present disclosure is not limited thereto. The example 1003 of a timing at which link control messages are transmitted and the example 1005 of the timing at which the control signal for coupling with the downlink path is generated are illustrated.

According to an embodiment, downlink transmission may be performed through a downlink symbol 1011, which is an initial symbol after a reference time 1010-1. In this case, an RU 220 may receive the control plane message for scheduling the downlink symbol 1011 at a timing 1031 before the reference time 1010-1.

For example, a reception window 1025-1, which is an interval in which the control plane message is received, may be identified based on a minimum time interval 1023-1 and a maximum time interval 1021-1. For example, information on the minimum time interval 1023-1 and the maximum time interval 1021-1 may be configured in the RU 220. Synchronization for the absolute time of the minimum time interval 1023-1 and the maximum time interval 1021-1 may be performed based on a synchronization plane message. In this case, the synchronization may be performed based on SCS information. The reception window 1025-1 may be a reception window configured for the downlink symbol 1011. In the example 1000, only the reception window for the downlink symbol 1011 is illustrated, but the embodiment of the present disclosure is not limited thereto. For example, the RU 220 may identify a reception window for each symbol.

For example, the RU 220 may identify the reception window 1025-1 configured for the downlink symbol 1011 and identify that the control plane message is received within the reception window 1025-1. Identifying that the control plane message is received within the reception window 1025-1 may be performed based on time identifiers and a start symbol identifier within a common header in the control plane message.

For example, the RU 220 may obtain a section for downlink scheduling of the control plane message based on data direction information and a section type identifier within the common header in the control plane message. For example, the data direction information may indicate a value (e.g., 1) representing the downlink transmission. For example, the section type identifier may include at least one of a section type 1 and a section type 5.

For example, the RU 220 may obtain a first section and a second section of the control plane message received at the timing 1031. In this case, each of the first section and the second section may be one of the section type 1 and the section type 5. In the example 1000, a case in which the start symbol identifier of the common header in the control plane message indicates the downlink symbol 1011 (i.e., a symbol #0) is assumed. In this case, a case in which a symbol number increment command of the first section is 0, the number of symbols of the first section is 1, a symbol number increment command of the second section is 1, and the number of symbols of the second section is 4, is assumed.

For example, the RU 220 may recognize that the downlink symbol 1011 is allocated to the control plane message based on parameters of the first section of the control plane message. For example, since the symbol number increment command is 0 and the number of symbols is 1, the RU 220 may identify that the downlink symbol 1011 is allocated, and store information on the downlink symbol 1011 in memory 370. In this case, the information on the downlink symbol 1011 may be stored in a first region of the memory 370 corresponding to an index of the downlink symbol 1011. A length of the first region may be 1 bit.

Also, for example, the RU 220 may recognize that downlink symbols 1012 are assigned to the control plane message based on parameters of the second section of the control plane message. For example, since the symbol number increment command is 1 and the number of symbols is 4, the RU 220 may identify that the downlink symbols 1012 (e.g., a symbol #1 to a symbol #4) are allocated and store information on the downlink symbols 1012 in the memory 370. In this case, the information on the downlink symbols 1012 may be stored in a second region of the memory 370 corresponding to an index of the downlink symbols 1012. A length of the second region may be 4 bits.

For example, the RU 220 may generate a control signal for coupling the downlink path and the RF switch 540 based on detecting a symbol including an end point 1051 of the reception window 1025-1. For example, the RU 220 may start reading the memory 370 in response to detecting the end point 1051. For example, the RU 220 may read the first region of the memory 370 and generate a control signal to couple a path to which the RF switch 540 is coupled for the downlink symbol 1011, to the downlink path. In addition, for example, the RU 220 may read the second region of the memory 370 and generate a control signal to couple a path to which the RF switch 540 is coupled for each of the downlink symbols 1012, to the downlink path. However, the embodiment of the present disclosure is not limited thereto. For example, the RU 220 may read the second region and generate a control signal to couple a path to which the RF switch 540 is coupled for the subsequent downlink symbols 1012, to the downlink path.

As described above, the RU 220 may transmit a downlink signal from the downlink symbol 1011 and the downlink symbols 1012 based on the control signals to couple the downlink path and the RF switch 540.

According to an embodiment, downlink transmission may be performed through downlink symbols 1013 (e.g., a symbol#10 to a symbol#13) after a reference time 1010-2. In this case, the RU 220 may receive another control plane message for scheduling the downlink symbols 1013 at a timing 1033 before the reference time 1010-2.

For example, a reception window 1025-2, which is an interval in which the another control plane message is received, may be identified based on a minimum time interval 1023-2 and a maximum time interval 1021-2. The reception window 1025-2 may be a reception window configured for a downlink symbol 1014 among the downlink symbols 1013.

For example, the RU 220 may identify the reception window 1025-2 configured for the downlink symbol 1014 and identify that the another control plane message is received within the reception window 1025-2. Identifying that the another control plane message is received within the reception window 1025-2 may be performed based on time identifiers and a start symbol identifier within a common header in the another control plane message.

For example, the RU 220 may obtain a section type for downlink scheduling of the another control plane message based on data direction information and a section type identifier within the common header of the another control plane message. For example, the data direction information may indicate a value (e.g., 1) representing the downlink transmission. For example, the section type identifier may include at least one of the section type 1 and the section type 5.

For example, the RU 220 may obtain a third section of the another control plane message received at the timing 1033. In this case, the third section may be one of the section type 1 and the section type 5. In the example 1000, a case in which the start symbol identifier of the common header in the another control plane message indicates the downlink symbol 1014 (i.e., the symbol #10) is assumed. In this case, a case in which a symbol number increment command of the third section is 0 and the number of symbols of the third section is 4 is assumed.

For example, the RU 220 may recognize that downlink symbols 1013 are assigned to the another control plane message based on parameters of the third section of the another control plane message. For example, since the symbol number increment command is 0 and the number of symbols is 4, the RU 220 may identify that downlink symbols 1013 are allocated and store information on the downlink symbols 1013 in the memory 370. In this case, the information on the downlink symbols 1013 may be stored in a third region of the memory 370 corresponding to an index of the downlink symbols 1013. A length of the third region may be 4 bits.

For example, the RU 220 may generate a control signal for coupling the downlink path and the RF switch 540 based on detecting a symbol including an end point 1053 of the reception window 1025-2. For example, the RU 220 may start reading the memory 370 in response to detecting the end point 1053. For example, the RU 220 may read the third region of the memory 370 and generate a control signal to couple a path to which the RF switch 540 is coupled for each of the downlink symbols 1013, to the downlink path. However, the embodiment of the present disclosure is not limited thereto. For example, the RU 220 may read the third region and generate a control signal to couple a path to which the RF switch 540 is coupled for the subsequent downlink symbols 1013, to the downlink path.

As described above, the RU 220 may transmit a downlink signal in the downlink symbols 1013 based on the control signals for coupling the downlink path and the RF switch 540.

Although not illustrated in FIG. 10, the RU 220 may receive an uplink control plane message for scheduling uplink symbols 1015. For example, the uplink control plane message may be obtained between the timing 1031 and the timing 1033. The RU 220 may store information indicating that a downlink symbol is not allocated in the memory 370 based on the uplink control plane message. In other words, the RU 220 may store information indicating that an uplink symbol is allocated in the memory 370. For example, the information indicating that the uplink symbol is allocated may be stored in a memory region between the second region and the third region. The RU 220 may generate another control signal for coupling an uplink path and the RF switch 540 based on the information indicating that the uplink symbol is allocated. Based on the another control signal, the RU 220 may transmit an uplink signal in the uplink symbol (or receive an uplink signal from user equipment).

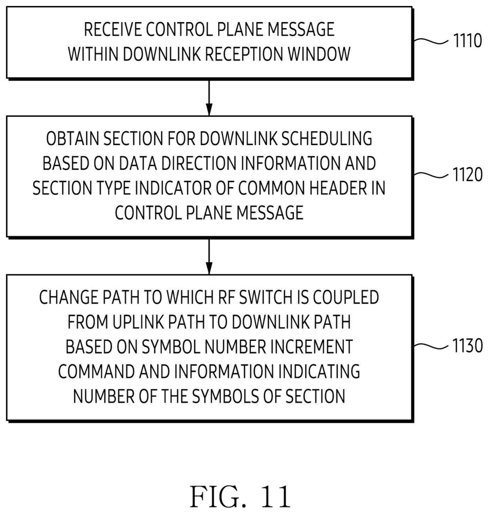

FIG. 11 illustrates an example of an operation flow of a method of changing a coupling state of an RF switch based on a control plane message.

At least some of the method of FIG. 11 may be performed by the RU 220 of FIG. 5. For example, at least some of the method may be controlled by a processor 380 of the RU 220. In the following embodiment, each operation may be sequentially performed, but is not necessarily performed sequentially. For example, an order of each operation may be changed, and at least two operations may be performed in parallel.

In operation 1110, the RU 220 may receive a control plane message within a downlink reception window. For example, the RU 220 may obtain the control plane message from a DU 210 within the downlink reception window.

For example, the RU 220 may obtain a common header in the control plane message. For example, the common header may include data direction information, time identifiers, a start symbol identifier, the number of sections, and a section type indicator. However, an embodiment of the present disclosure is not limited thereto. Based on the data direction information of the common header, the RU 220 may identify that the control plane message is a control plane message for downlink (hereinafter, a downlink control plane message). In addition, the RU 220 may identify that the downlink control plane message includes a section for downlink scheduling based on the section type indicator of the common header.

According to an embodiment, the RU 220 may receive a synchronization plane message. For example, the RU 220 may receive the synchronization plane message from the DU 210. For example, the synchronization plane message may include a number of a frame synchronized with an absolute time and information (e.g., frame tick) indicating a start frame of the frame. For example, the absolute time may represent a time synchronized between a base station 110 and user equipment 120.

According to an embodiment, the RU 220 may obtain SCS information. For example, the RU 220 may obtain the SCS information from the DU 210. For example, the SCS information may indicate one SCS used for TDD among a plurality of SCSs that may be supported by the RU 220. For example, the one SCS may include 15 kHz, 30 kHz, or 120 kHz.

According to an embodiment, the RU 220 may transmit a management plane message. For example, the RU 220 may transmit the management plane message to the DU 210. For example, the management plane message may include candidates of a reception window for the downlink control plane message. For example, the candidates may be determined based on the time information of the common header included in the downlink control plane message. For example, the candidates may be referred to as a specification value. For example, the candidates may be a value configured in the RU 220. For example, the DU 210 may perform downlink transmission in consideration of the reception window based on the management plane message. For example, the time information may include at least one of a start symbol identifier or a time offset. For example, the reception window may be determined based on a maximum time interval and a minimum time interval defined for the time information. For example, the maximum time interval may include a T2a_max_cp_dl parameter. For example, the minimum time interval may include a T2a_min_cp_dl parameter. For example, the reception window may be identified for each symbol.

For example, the RU 220 may identify the downlink reception window for the control plane message based on the time identifiers of the common header. For example, the RU 220 may obtain candidates of synchronized reception windows based on the synchronization plane message, the SCS information, and parameters for the downlink reception window. The RU 220 may obtain the downlink reception window corresponding to the time identifiers among the candidates. The RU 220 may identify whether the control plane message is obtained within the downlink reception window. For example, it is possible to identify whether a start point and an end point at which the control plane message is received are included within the downlink reception window.

According to an embodiment, in a case that the control plane message is received outside the downlink reception window, the RU 220 may receive another control plane message after the control plane message.

In operation 1120, the RU 220 may obtain a section for downlink scheduling based on the data direction information and the section type indicator of the common header in the control plane message.

For example, the RU 220 may identify the section based on the section type indicator of the common header in the control plane message. For example, the section type indicator may indicate at least one of a section type 1 and a section type 5. For example, the RU 220 may obtain the section indicated based on the section type indicator.

For example, the section may include a symbol number increment command and information indicating the number of symbols. For example, the symbol number increment command may be used to indicate a symbol related to the section. For example, in a case that a value of the symbol number increment command is 0, a symbol number may be maintained. For example, in a case that the value of the symbol number increment command is 0, a symbol (e.g., a symbol#0) indicated by the start symbol identifier of the common header may be used for the section. For example, in a case that the value of the symbol number increment command is 1, a next symbol (e.g., a symbol#1) that is subsequent to the symbol (e.g., the symbol#0) indicated by the start symbol identifier may be used for the section. For example, the information indicating the number of symbols may be used to indicate the number of symbols including the symbols identified by the symbol number increment command. For example, a symbol indicated by the information indicating the number of the symbols may be allocated for the section. For example, the number of symbols may indicate a value greater than or equal to 1. Accordingly, the information indicating the number of symbols may be used to indicate one or more downlink symbols.

According to an embodiment, the RU 220 may obtain the one or more downlink symbols based on the section. For example, the RU 220 may obtain the one or more downlink symbols based on the start symbol identifier, the symbol number increment command, and the information indicating the number of symbols. In the example, a case of obtaining the one or more downlink symbols based on the section included in the control plane message is described, but the embodiment of the present disclosure is not limited thereto. For example, the RU 220 may obtain the one or more downlink symbols based on the section and another section of the control plane message. For example, the another section, which is a section subsequent to the section, may include the section type 1 or the section type 5.

According to an embodiment, the RU 220 may store information indicating the one or more downlink symbols. For example, the RU 220 may store the information indicating the one or more downlink symbols in memory 370. Storing the information in the memory 370 may be referred to as writing the memory 370.

For example, the RU 220 may store the information including an index within a slot of the one or more downlink symbols in the memory 370. In this case, the memory 370 may include a memory region for storing the information. For example, the memory region may include a memory region for two slots. For example, the memory region may include 28 bits (=14symbols*2). For example, the one or more downlink symbols allocated for downlink transmission may be indicated through the index of the one or more downlink symbols. In other words, the index (or the information) of the one or more downlink symbols may be used to indicate whether the downlink control plane message is allocated.

In operation 1130, the RU 220 may change a path to which an RF switch 540 is coupled from an uplink path to a downlink path based on the symbol number increment command and the information indicating the number of the symbols of the section.

According to an embodiment, the RU 220 may detect a last symbol including an end point of the downlink reception window. For example, the RU 220 may detect the last symbol including the end point of the downlink reception window identified based on the control plane message. However, the embodiment of the present disclosure is not limited thereto. For example, the RU 220 may detect an absolute time corresponding to the end point of the reception window.

According to an embodiment, the RU 220 may generate a control signal based on information indicating a downlink symbol stored in the memory 370. The memory 370 of FIG. 9 may be in a state in which the information indicating the one or more downlink symbols is stored. For example, the RU 220 may generate the control signal based on the information in the memory 370. For example, the RU 220 may generate the control signal for the downlink symbol based on the information indicating the downlink symbol. In other words, the RU 220 may generate the control signal for each symbol. However, the embodiment of the present disclosure is not limited thereto. For example, the RU 220 may generate the control signal for subsequent downlink symbols.

According to an embodiment, the RU 220 may couple the RF switch 540 to the downlink path based on the control signal. For example, the control signal may be used to change the path to which the RF switch 540 is coupled to the downlink path for transmission of the downlink signal. For example, the RF switch 540 may disconnect coupling with an uplink path and be coupled to the downlink path based on the control signal.

According to an embodiment, the RU 220 may transmit a downlink signal in the downlink symbol. For example, the RU 220 may generate the downlink signal through the downlink path activated by controlling the RF switch 540 based on the control signal. The RU 220 may transmit the generated downlink signal in the downlink symbol. For example, the downlink symbol may be used to transmit the downlink signal to the user equipment 120 connected to the RU 220.

According to an embodiment, the RU 220 may generate another control signal based on information that does not indicate the downlink symbol stored in the memory 370 (or other information indicating an uplink symbol). The RU 220 may change the path to which the RF switch 540 is coupled to the uplink path based on the another control signal. For example, the RU 220 may change it to the uplink path based on the another control signal. The RU 220 may transmit the uplink signal in the uplink symbol indicated by the memory 370.

According to an embodiment, the RU 220 may generate the control signal (or the another control signal) based on the information of the memory 370 and transmit the downlink signal (or the uplink signal) and then clear the memory 370. Thereafter, the RU 220 may read a bit following a bit indicating the downlink symbol in the memory 370 and then transmit the downlink signal or the uplink signal based on the bit. The downlink signal may be transmitted from each of the one or more downlink symbols stored in the memory 370. The uplink signal may be transmitted outside the one or more downlink symbols. That is, the RU 220 may repeat reading for the memory 370 to generate and transmit the downlink signal or the uplink signal for each symbol. For example, the reading may be repeated for a memory region (e.g., the first memory region 860 and the second memory region 870) of the memory 370. The RU 220 may read and clear each bit (i.e., symbol unit) of the memory region.

Although not illustrated in FIG. 11, the RU 220 may identify whether another section of the control plane message is obtained. For example, after storing the information obtained based on the section of the control plane message in the memory 370, the RU 220 may identify whether the another section of the control plane message is included. For example, the RU 220 may obtain one or more other downlink symbols for the another section based on the another section and store information on the one or more other downlink symbols in the memory 370. Thereafter, the RU 220 may perform downlink transmission based on the information on the one or more other downlink symbols.

A device and a method according to embodiments of the present disclosure proposes a device and a method for dynamically controlling a path in an RU 220. The device and the method according to embodiments of the present disclosure may dynamically identify whether a specific symbol is a resource for downlink transmission or a resource for uplink transmission based on parameters of a control plane message obtained from a DU 210. The device and the method according to embodiments of the present disclosure may control an RF switch selectively coupled to one of a downlink path and an uplink path according to the specific symbol. Accordingly, the device and the method according to embodiments of the present disclosure may dynamically support TDD.

As described above, a radio unit (RU) may comprise a radio frequency (RF) switch selectively coupled to one of an uplink path and a downlink path for time duplex division (TDD). The RU may comprise at least one processor comprising processing circuitry. The RU may comprise at least one memory, including instructions, including one or more storage media. The instructions, when executed individually and collectively by the at least one processor, may cause the RU to receive, from a distributed unit (DU), a control plane message within a downlink reception window. The instructions, when executed individually and collectively by the at least one processor, may cause the RU to obtain a section for downlink scheduling based on a section type indicator and data direction information of a common header in the control plane message. The instructions, when executed individually and collectively by the at least one processor, may cause the RU to change a path to which the RF switch is coupled from the uplink path to the downlink path based on a symbol number increment command and information indicating the number of symbols of the section.

According to an embodiment, the instructions, when executed individually and collectively by the at least one processor, may cause the RU to receive, from the DU, a synchronization plane message including information indicating a frame for downlink transmission of the RU. The instructions, when executed individually and collectively by the at least one processor, may cause the RU to generate a synchronized frame structure based on the synchronization plane message. The frame structure may be used for transmitting a downlink signal to user equipment.

According to an embodiment, the instructions, when executed individually and collectively by the at least one processor, may cause the RU to obtain the downlink reception window for the control plane message based on time identifiers and start symbol identification information of the common header, and parameters for the downlink reception window. The time identifiers may include a frame ID, a subframe ID, and a slot ID.

According to an embodiment, the instructions, when executed individually and collectively by the at least one processor, may cause the RU to identify whether the control plane message is received within an interval of the downlink reception window or not. The instructions, when executed individually and collectively by the at least one processor, may cause the RU to obtain the section of the control plane message in response to the control plane message being received within the interval. The instructions, when executed individually and collectively by the at least one processor, may cause the RU to obtain another control plane message in response to at least a part of the control plane message being received outside the interval.

According to an embodiment, the data direction information may indicate downlink. The section type indicator may indicate a section type 1 or a section type 5.

According to an embodiment, the instructions, when executed individually and collectively by the at least one processor, may cause the RU to obtain another section for downlink scheduling based on the data direction information and the section type indicator. The another section in the control plane message may be subsequent to the section.

According to an embodiment, the instructions, when executed individually and collectively by the at least one processor, may cause the RU to obtain one or more downlink symbols allocated in the section based on a symbol indicated by start symbol identification information of the common header and the number of symbols and the symbol number increment command for the symbol. The instructions, when executed individually and collectively by the at least one processor, may cause the RU to store information indicating the one or more downlink symbols in the memory.

According to an embodiment, the one or more downlink symbols may include the symbol in a case that the symbol number increment command indicates 0. The one or more downlink symbols may include another symbol after the symbol in a case that the symbol number increment command indicates 1.

According to an embodiment, the one or more downlink symbols may be scheduled based on the number of symbols.

According to an embodiment, the memory may include a memory region for two slots. The information indicating the one or more downlink symbols may be stored in a position corresponding to the one or more downlink symbols in the memory region.

According to an embodiment, the instructions, when executed individually and collectively by the at least one processor, may cause the RU to detect a last symbol including an end point of the downlink reception window. The instructions, when executed individually and collectively by the at least one processor, may cause the RU to generate a control signal corresponding to the one or more downlink symbols based on the information indicating the one or more downlink symbols stored in the memory in response to detecting the last symbol. The instructions, when executed individually and collectively by the at least one processor, may cause the RU to couple the RF switch to the downlink path based on the control signal. The instructions, when executed individually and collectively by the at least one processor, may cause the RU to transmit, to user equipment, a downlink signal on the one or more downlink symbols through the downlink path coupled to the RF switch.

According to an embodiment, the control signal may be generated before a designated time interval from an initial symbol of the one or more downlink symbols. The designated time interval may be identified based on a processing delay for generating the control signal.

According to an embodiment, the instructions, when executed individually and collectively by the at least one processor, may cause the RU to receive, from the DU, an uplink control plane message within another downlink reception window after the downlink reception window. The instructions, when executed individually and collectively by the at least one processor, may cause the RU to change the path to which the RF switch is coupled from the downlink path to the uplink path based on the uplink control plane message.

According to an embodiment, the instructions, when executed individually and collectively by the at least one processor, may cause the RU to receive, from the DU, another control plane message within the another downlink reception window after the downlink reception window. The instructions, when executed individually and collectively by the at least one processor, may cause the RU to obtain another section for downlink scheduling based on a section type indicator and data direction information of a common header in the another control plane message. The instructions, when executed individually and collectively by the at least one processor, may cause the RU to change the path to which the RF switch is coupled from the uplink path to the downlink path based on a symbol number increment command and information indicating the number of symbols of the another section. Resources indicated by the control plane message and the another control plane message may be used for a downlink signal transmitted on symbols in a slot.

According to an embodiment, one subcarrier spacing (SCS) of a plurality of SCSs supported by the RU may be used in resources indicated by the control plane message.

As described above, a method performed by a radio unit (RU) may comprise receiving, from a distributed unit (DU), a control plane message within a downlink reception window. The method may comprise obtaining a section for downlink scheduling based on a section type indicator and data direction information of a common header in the control plane message. The method may comprise changing a path to which a radio frequency (RF) switch selectively coupled to one of an uplink path and a downlink path for time duplex division (TDD) is coupled from the uplink path to the downlink path based on a symbol number increment command and information indicating the number of symbols of the section.

According to an embodiment, the method may comprise obtaining the downlink reception window for the control plane message based on time identifiers and start symbol identification information in the common header, and parameters for the downlink reception window. The time identifiers may include a frame ID, a subframe ID, and a slot ID.

According to an embodiment, the data direction information may indicate downlink. The section type indicator may indicate a section type 1 or a section type 5.

According to an embodiment, the method may comprise obtaining one or more downlink symbols allocated in the section based on a symbol indicated by start symbol identification information of the common header and the number of symbols and the symbol number increment command for the symbol. The method may comprise storing information indicating the one or more downlink symbols in memory of the RU.

According to an embodiment, the memory may include a memory region for two slots. The information indicating the one or more downlink symbols may be stored in a position corresponding to the one or more downlink symbols in the memory region.

As described above, a non-transitory computer-readable storage medium may store one or more programs comprising instructions which, when executed individually or collectively by at least one processor of a radio unit (RU) including a radio frequency (RF) switch selectively coupled to one of an uplink path and a downlink path for time duplex division (TDD), cause the RU to receive, from a distributed unit (DU), a control plane message within a downlink reception window. The non-transitory computer-readable storage medium may store one or more programs comprising instructions which, when executed individually and collectively by the at least one processor, cause the RU to obtain a section for downlink scheduling based on a section type indicator and data direction information of a common header in the control plane message. The non-transitory computer-readable storage medium may store one or more programs comprising instructions which, when executed individually and collectively by the at least one processor, cause the RU to change a path to which the RF switch is coupled from the uplink path to the downlink path based on a symbol number increment command and information indicating the number of symbols of the section.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A radio unit (RU) comprising:
a radio frequency (RF) switch selectively coupled to one of an uplink path and a downlink path for time division duplex (TDD);
at least one processor comprising processing circuitry; and
at least one memory, including instructions, including one or more storage media,
wherein the instructions, when executed individually or collectively by the at least one processor, cause the RU to:
receive, from a distributed unit (DU), a control plane message within a downlink reception window;
obtain a section for downlink scheduling based on a section type indicator and data direction information of a common header in the control plane message; and
change a path to which the RF switch is coupled from the uplink path to the downlink path based on a symbol number increment command and information indicating the number of symbols of the section.

2. The RU of claim 1, wherein the instructions, when executed individually and collectively by the at least one processor, cause the RU to:
receive, from the DU, a synchronization plane message including information indicating a frame for downlink transmission of the RU; and
generate a synchronized frame structure based on the synchronization plane message,
wherein the frame structure is used for transmitting a downlink signal to user equipment.

3. The RU of claim 1, wherein the instructions, when executed individually and collectively by the at least one processor, cause the RU to:
obtain the downlink reception window for the control plane message based on time identifiers and start symbol identification information of the common header, and parameters for the downlink reception window, and
wherein the time identifiers include a frame ID, a subframe ID, and a slot ID.

4. The RU of claim 3, wherein the instructions, when executed individually and collectively by the at least one processor, cause the RU to:
identify whether the control plane message is received within an interval of the downlink reception window or not;
obtain the section of the control plane message in response to the control plane message being received within the interval; and
obtain another control plane message in response to at least a part of the control plane message being received outside the interval.

5. The RU of claim 1,
wherein the data direction information indicates downlink, and
wherein the section type indicator indicates a section type 1 or a section type 5.

6. The RU of claim 1, wherein the instructions, when executed individually or collectively by the at least one processor, cause the RU to:
obtain another section for downlink scheduling based on the data direction information and the section type indicator, and
wherein the another section in the control plane message is subsequent to the section.

7. The RU of claim 1, wherein the instructions, when executed individually or collectively by the at least one processor, cause the RU to:
obtain one or more downlink symbols allocated in the section based on a symbol indicated by start symbol identification information of the common header and the number of symbols and the symbol number increment command for the symbol; and
store information indicating the one or more downlink symbols in the memory.

8. The RU of claim 7,
wherein the one or more downlink symbols includes the symbol in a case that the symbol number increment command indicates 0, and
wherein the one or more downlink symbols includes another symbol after the symbol in a case that the symbol number increment command indicates 1.

9. The RU of claim 7,
wherein the one or more downlink symbols is scheduled based on the number of symbols.

10. The RU of claim 7,
wherein the memory includes a memory region for two slots, and
wherein the information indicating the one or more downlink symbols is stored in a position corresponding to the one or more downlink symbols in the memory region.

11. The RU of claim 7, wherein the instructions, when executed individually and collectively by the at least one processor, cause the RU to:
detect a last symbol including an end point of the downlink reception window;
generate a control signal corresponding to the one or more downlink symbols based on the information indicating the one or more downlink symbols stored in the memory in response to detecting the last symbol;
couple the RF switch to the downlink path based on the control signal; and
transmit, to user equipment, a downlink signal on the one or more downlink symbols through the downlink path coupled to the RF switch.

12. The RU of claim 11,
wherein the control signal is generated before a designated time interval from an initial symbol of the one or more downlink symbols, and
wherein the designated time interval is identified based on a processing delay for generating the control signal.

13. The RU of claim 1, wherein the instructions, when executed individually or collectively by the at least one processor, cause the RU to:
receive, from the DU, an uplink control plane message within another downlink reception window after the downlink reception window; and
change the path to which the RF switch is coupled from the downlink path to the uplink path based on the uplink control plane message.
receive, from the DU, another control plane message within the another downlink reception window;
obtain another section for downlink scheduling based on a section type indicator and data direction information of a common header in the another control plane message; and
change the path to which the RF switch is coupled from the uplink path to the downlink path based on a symbol number increment command and information indicating the number of symbols of the another section,
wherein resources indicated by the control plane message and the another control plane message are used for a downlink signal transmitted on symbols in a slot.

14. A method performed by a radio unit (RU) comprising:
receiving, from a distributed unit (DU), a control plane message within a downlink reception window;
obtaining a section for downlink scheduling based on a section type indicator and data direction information of a common header in the control plane message; and
changing a path to which a radio frequency (RF) switch selectively coupled to one of an uplink path and a downlink path for time duplex division (TDD) is coupled from the uplink path to the downlink path based on a symbol number increment command and information indicating the number of symbols of the section.

15. A non-transitory computer-readable storage medium storing one or more programs including instructions which, when executed individually or collectively by at least one processor of a radio unit (RU) including a radio frequency (RF) switch selectively coupled to one of an uplink path and a downlink path for time duplex division (TDD), cause the RU to:
receive, from a distributed unit (DU), a control plane message within a downlink reception window;
obtain a section for downlink scheduling based on a section type indicator and data direction information of a common header in the control plane message; and
change a path to which the RF switch is coupled from the uplink path to the downlink path based on a symbol number increment command and information indicating the number of symbols of the section.
